# FASCICULE DE BREVET EUROPEEN

(11) **EP 1 268 111 B1**
(45) Date de publication et mention de la délivrance du brevet: **19.11.2008**
(21) Numéro de dépôt: 01917142.0
(22) Date de dépôt: 15.03.2001
(51) Int. Cl.: B23K 9/133

(54) **DISPOSITIF DE SOUDURE ELECTRIQUE POUR LA SOUDURE SOUS ATMOSPHERE GAZEUSE**
VORRICHTUNG ZUM LICHTBOGENSCHWEISSEN UNTER SCHUTZGAS
DEVICE FOR ELECTRIC WELDING UNDER GASEOUS ATMOSPHERE

(30) Priorité: 17.03.2000 FR 0003617
(43) Date de publication de la demande: 02.01.2003
(73) Titulaire: Toquet, Bernard, 43800 Chamalières sur Loire (FR)
(72) Inventeur: Toquet, Bernard, 43800 Chamalières sur Loire (FR)
(74) Mandataire: Richebourg, Michel François
(86) Numéro de dépôt international: PCT/FR2001/000763
(87) Numéro de publication internationale: WO 2001/068308

(56) Documents cités:
- US-A- 4 150 772
- US-A- 4 687 899
- US-A- 4 791 271
- US-A- 4 873 419

## Description

Le présent dispositif selon l'invention concerne le domaine technique de la soudure et notamment la soudure sous atmosphère de gaz inerte. Jusqu'à des temps récents, les soudures étaient réalisées de manière entièrement manuelle par un opérateur qui d'une main tenait la baguette de métal servant à la soudure et de l'autre main la torche apportant l'énergie nécessaire pour faire fondre la baguette.

Sont ensuite apparus des appareils portatifs reproduisant le mouvement de la main de l'opérateur qui tenait la baguette. De tels dispositifs connus sont par exemple décrits dans le brevet FR 2 723 330.

Le dispositif de soudure semi-automatique décrit dans ce brevet permet d'une part de dégager la main de l'opérateur qui tient la baguette et d'autre part de procurer un mouvement régulier d'avance globale du fil d'apport en même temps qu'un mouvement combiné de va-et-vient du fil d'apport.

Un tel dispositif a permis d'augmenter sensiblement le temps de soudure par opérateur, de même que la qualité du travail effectué car l'avance du fil d'apport est plus régulière. De plus, le travail se fait de manière plus rapide et réduit ainsi les temps de chauffe sur les pièces de métal à souder ce qui a pour conséquence de réduire les risques de déformation des pièces que l'on souhaite souder et donc les pertes de matières premières et de temps.

Tous ces avantages ont pour résultat de diminuer les coûts liés aux opérations de soudure grâce à un gain sensible de productivité et des pertes réduites de matière.

Le mouvement du fil d'apport procurant tous ces avantages est obtenu dans ce dispositif de l'art antérieur au moyen d'une double motorisation du fil d'apport.

Ces deux motorisations sont indépendantes l'une de l'autre et sont commandées par des organes de commande indépendants l'un permettant d'agir sur la vitesse d'avancée en continu du fil d'apport par l'intermédiaire d'un premier moteur et l'autre permettant d'agir sur la fréquence du mouvement de va-et-vient par l'intermédiaire d'un second moteur.

La première motorisation à pour fonction de communiquer au fil d'apport un mouvement régulier d'avance afin que la torche de soudure soit régulièrement approvisionnée en fil d'apport.

La seconde motorisation à pour fonction de communiquer au fil d'apport un mouvement d'avance et de recul ou va-et-vient du fil d'apport (mouvement pas à pas) ce qui permet la reproduction fidèle du mouvement de la main de l'opérateur appliqué à la baguette.

Afin de réaliser ces fonctions qui sont le mouvement d'avancée continue du fil d'apport et le mouvement de va et vient, le dispositif selon l'art antérieur comprend des moyens d'entraînement du fil d'apport qui sont des moteurs.

Ces moteurs sont de manière courante de type à basse tension et actionnent un ou plusieurs moyens de transmission du mouvement de rotation, à des galets d'entraînement où repose le fil d'apport qui est appliqué sur ledit galet, grâce à un contre galet, ceci pour permettre l'entraînement et l'avancée continue du fil d'apport.

Les galets d'entraînement qui sont présents sur une platine de support sont eux-mêmes mis en mouvement de va-et-vient par des moyens adaptés pour la communication d'un mouvement de va-et-vient à ladite platine support. Les deux mouvement combinés permettent de communiquer au fil d'apport un mouvement identique à celui que communiquerait un opérateur de soudure qualifié à un fil d'apport utilisé pour la soudure.

Le second moteur selon le dispositif de l'art antérieur peut être couplé directement à une came présentant au moins deux points d'appuis, ou à un support couplé à une bielle qui agit sur la platine de support, celle qui porte également les galets d'entraînement en continu du fil d'apport.

Ce dispositif semi automatique pour la soudure de l'art antérieur comprend toutefois un inconvénient majeur pour l'opérateur.

En effet, ce type de dispositif oblige ce dernier à effectuer 2 réglages séparés.

Il s'agit d'une part de régler la vitesse d'avancée continue ou de débobinage du fil d'apport et d'autre part de régler la vitesse du mouvement de va-et-vient du fil d'apport, ceci en fonction de la quantité d'énergie délivrée au niveau de la torche et donc de la rapidité de fonte du fil d'apport tout en tenant compte de l'amplitude du mouvement de va-et-vient du fil d'apport.

Ces deux réglages doivent se faire simultanément, ce qui oblige l'opérateur à se servir simultanément de ses deux mains pour agir sur les deux organes de réglage. Ceci l'empêche donc de vérifier in situ et de visu et de manière immédiate si le réglage qu'il a effectué est correct selon la nature de la soudure à réaliser et les caractéristiques du fil d'apport utilisé pour la soudure.

En effet, suivant la nature des pièces à souder on pourra utiliser des fils d'apport de différentes natures. On préférera avoir des gouttes de soudure plus ou moins volumineuses, à une fréquence plus ou moins élevée. Il faudra également trouver un bon compromis entre le nombre de gouttes que l'on souhaite déposer par unité de longueur et le type de soudure à réaliser.

Obtenir le bon réglage, oblige donc l'opérateur à trouver le compromis entre la quantité d'énergie fixée qui alimente la torche, la fréquence et l'amplitude du mouvement de va-et-vient du fil d'apport et la vitesse d'avancée continue ou de débobinage du fil d'apport à partir de la bobine.

La difficulté du réglage est accrue par le fait que le fil d'apport peut avoir une épaisseur variable et peut être constitué d'un métal ou d'un alliage de métal différent selon l'application que l'on en fait. L'utilisation de métaux ou alliages de différente nature implique que des énergies différentes pour la fonte doivent êtres fournies.

Cette opération de réglage des paramètres est fastidieuse et minutieuse surtout si l'opérateur est amené à faire de nombreuses opérations de réglage au cours de son temps de travail sur de nombreuses pièces différentes de nature différente.

Pour obtenir le bon réglage l'opérateur doit posséder un bon savoir faire. Cela nécessite de posséder une bonne connaissance des différents types de soudures et notamment du nombre de gouttes qu'il convient de déposer pour obtenir une soudure adéquate et adaptée au type ou style de pièces à souder.

Ainsi, afin d'obtenir les bonnes caractéristiques pour la soudure désirée, un réglage fin et adapté s'impose.

C'est pourquoi, dans les dispositifs de l'art antérieur, en particulier dans le dispositif décrit dans le brevet FR 2723330, deux moyens séparés de réglage ont été conservés afin de garder la liberté d'agir et de contrôler séparément, d'une part la vitesse de dévidage du fil et d'autre part la vitesse du mouvement de va-et-vient.

Ces dispositifs de l'art antérieur ont ainsi permis de préserver la liberté d'agir séparément sur ces deux paramètres afin d'avoir toujours la meilleure qualité de soudure possible. Il semble que malgré les difficultés d'utilisation de ces dispositifs de l'art antérieur, la profession se soit accommodée de ces dispositifs afin de préserver la précision de réglage.

Il n'était absolument pas évident et pensable pour l'homme du métier de s'affranchir d'un des moyens de réglage pour obtenir un aussi bon résultat.

L'inconvénient pour de tels dispositifs de soudure est que pour une efficacité correcte, ils doivent êtres manipulés par un opérateur relativement qualifié. Ces dispositifs ne permettent donc pas totalement de s'affranchir d'une main d'oeuvre expérimentée qui présente l'inconvénient d'être rare et chère.

La présente invention conserve les avantages essentiels procurés par les dispositifs selon l'art antérieur. Elle se propose en outre de résoudre le problème crucial de la difficulté de réglage et de conservation d'une qualité de soudure constante. Le dispositif selon l'invention met en oeuvre une combinaison nouvelle et inventive de moyens qui sont de nature à rendre ledit réglage très aisé pour l'opérateur. Le dispositif permet de garder une très bonne qualité de soudure même s'il n'est pas utilisé par un opérateur spécialisé.

Le but du dispositif de soudure selon l'invention est d'offrir une combinaison de moyens qui nécessitent un réglage unique pour la commande des paramètres de cinématique du fil d'apport, c'est-à-dire pour obtenir le mouvement d'avancée continue du fil d'apport combiné avec un mouvement de va-et-vient.

La combinaison nouvelle de ces moyens concourre à une coordination et une synchronisation entre le mouvement d'avancée continue et le mouvement de va-et-vient du fil en tenant compte de la quantité d'énergie qui est délivrée au niveau de la torche pour faire fondre le fil d'apport.

Ces caractéristiques de réglage de la cinématique et le niveau d'énergie délivrée pour faire fondre le fil peut être calculé automatiquement en fonction de l'entrée de valeurs caractéristiques du fil d'apport et des pièces à souder, tel que diamètre du fil, la nature du métal qui constitue le fil, épaisseur et nature des pièces à souder.

De plus, grâce à sa conception, le dispositif permet de concevoir des ensembles de soudure possédant un encombrement dans l'espace plus réduit que pour les dispositifs de l'art antérieur. Cette réduction de l'encombrement qui permet d'accéder à des endroits très confinés et qui seraient inaccessibles avec les dispositifs de l'art antérieur, par exemple en construction navale.

Par ailleurs, en raison de son nombre d'éléments constitutifs limités, son coût de revient est réduit car la complexité de montage diminue. La fabrication est donc plus rapide. De plus, comme le nombre de pièce est réduit le coût d'achat des éléments constitutifs est également réduit, d'autant plus que ces éléments pourront être aisément trouvés dans le commerce.

Le fonctionnement de l'invention va apparaître plus clairement à partir de la description détaillée du dispositif de soudure selon l'invention. Cette description se base sur un mode de réalisation préféré et sur la figure annexée. Ce mode de réalisation préféré de l'invention est donné ici à titre d'exemple et ne constitue en aucun cas une limitation de l'invention.

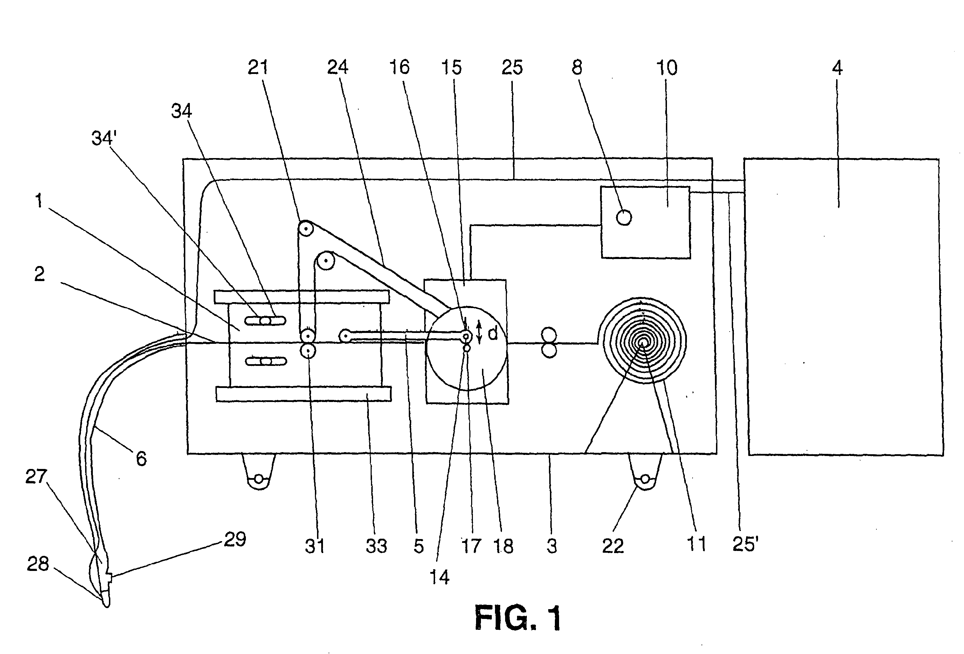

La figure 1 est une vue latérale schématique en écorché d'un dispositif de soudure selon la présente invention auquel une des parois latérales de la carrosserie a été enlevée. La figure représente un des modes de réalisation préféré de l'invention qui est inclus ici à titre exemplatif et ne constitue en aucun cas une limitation de l'invention.

La description et le fonctionnement de l'invention vont apparaître plus clairement en faisant référence aux numéros de références de la figure.

Le dispositif selon l'invention comprend une carrosserie ou enveloppe (3) reliée à un poste de distribution d'énergie (4) qui peut être solidaire de l'enveloppe (3) ou non. Cette enveloppe ou boîtier de carrosserie sera avantageusement munie de roues (22) et tout autre moyen pour faciliter son déplacement par exemple des poignées ;

Le poste de distribution d'énergie (4) alimente le dispositif de soudure selon l'invention avec un câble d'alimentation en énergie (25') du moteur (15). Ce moteur sert à impulser la cinématique complète au fil d'apport (2). Les paramètres du moteur sont réglés par une unique commande (8) de la cinématique du fil d'apport (2). D'autre part, le poste de distribution d'énergie alimente en énergie au moyen d'un second câble d'alimentation (25) l'extrémité (28) de la torche (27) munie d'un bouton ou poignée de mise en marche (29) du dispositif pour faire fondre le fil d'apport (2).

Le dispositif de soudure électrique sous atmosphère gazeuse électrique comprend une enveloppe (3), un poste de distribution d'énergie (4), un chariot de distribution continue de fil (2) d'apport présenté en bobine (11). Il se caractérise en ce qu'il comprend une combinaison de moyens (1, 5, 18, 21, 24, 31) englobés à l'intérieur de l'enveloppe. Ces moyens sont connectés entre eux par un couplage qui est de préférence mécanique, lesdits moyens (1, 5, 18, 21, 24, 31) sont tributaires d'une seule commande pour obtenir les caractéristiques cinématiques souhaitées du mouvement du fil (2).

De plus, les moyens (1, 5, 18, 21, 24, 31) sont actionnés par un moteur unique (15), commandé par un moyen de réglage unique (8) situé sur une console de commande (10) qui permet de régler conjointement la vitesse de va et vient du support et la vitesse de débobinage du fil.

Ce moteur (15) entraîne simultanément en rotation un moyen (18) direct ou intermédiaire qui transmet au support (1) un mouvement de va et vient et également en même temps un mouvement de rotation au moyen d'avance continue du fil (31).

Par ailleurs, le moteur (15) entraîne simultanément un moyen (18) couplé à une bielle (5), ledit moyen (18) communique un mouvement de va-et-vient à un support (1) et simultanément un mouvement de rotation à un moyen (24) d'entraînement des poulies (21) et des galets (31).

Ledit moyen (18) de communication du mouvement de va-et-vient (18) au support (1) supporte au moins une bielle (5). Celle-ci est fixée librement en rotation sur ledit moyen de communication (18) du mouvement de va-et-vient, la ou lesdites bielles (5) étant simultanément reliées librement en rotation au support (1).

La bielle (5) peut en outre être fixée dans une direction radiale par rapport au centre de rotation (17) du moyen (18) au niveau d'une fente adaptée (16) présente sur ledit moyen (18).

Grâce à cet arrangement, un opérateur pourra faire varier la distance « d » entre le centre de rotation (17) et le centre de rotation de la tête de la bielle (14). Cet arrangement permettra au besoin de faire varier l'amplitude du mouvement de va et vient du fil d'apport (2).

Ce moyen de réglage de l'àmplitude peut être une fente (16) le long de laquelle, on pourra faire glisser radialement par rapport au centre de rotation (17) la tête (14) de la bielle (5).

Le moyen (18) de communication de mouvement au support (1) peut être une came de type à au moins deux points d'appuis ou un plateau qui supporte la bielle (5). Si le moyen (18) est de type came, alors le support (1) devra être lié à des moyens élastiques ou magnétiques de rappels pour son retour à sa position initiale. Ainsi le mouvement de va et vient se réalisera. Les moyens de rappel seront par exemple des ressorts ou des aimants, de préférence des ressorts.

De manière avantageuse, le moyen d'entraînement (24) des moyens (21, 31), est au moins une courroie, au moins une chaîne ou une cascade d'engrenage, mais sera de préférence une courroie.

Cette courroie (24) peut être munie de moyens de coopération qui peuvent être des dents ou un revêtement adapté pour favoriser la prise avec les moyens de transmission du type poulies (21) et avec les galets d'entraînement (31).

Le dispositif selon l'invention présente au moins un galet et un contre galet (31). Ceux-ci seront de préférence conçus pour coopérer, de sorte que le fil d'apport soit convenablement entraîné vers la torche via un conduit ou gaine souple (6) jusque vers la partie d'extrémité de type buse (28) de la torche (27). Les galets (31) sont fixés de manière libre en rotation sur le support (1).

Par ailleurs, les galets et contre galets (31) peuvent êtres profilés de telle sorte que la surface d'appuis du galet présente un profil en forme de gouttière et le contre galet un profil de forme complémentaire. De cette manière, le fil d'apport enserré présentera un bon maintien.

Pour un bon fonctionnement du dispositif, le support (1) en fonctionnement décrit un mouvement de va-et-vient dans une direction sensiblement identique à celle du fil d'apport.

C'est pourquoi, le support (1) est guidé par des moyens de guidage (33) pour un mouvement sensiblement parallèle à la direction du fil d'apport (2).

Les moyens de guidage (33) sont au moins une glissière, de préférence deux glissières ou au moins une fente de guidage (34) et au moins un plot de guidage (34').

Le dispositif de soudure selon l'invention comprend à l'extrémité de la gaine (6), une torche (27) munie d'une buse de sortie (28) du fil d'apport (2). La torche est en outre munie d'un bouton (29) de mise en marche du dispositif, lorsque l'opérateur actionne le bouton.

De manière optionnelle, le dispositif pourra comprendre des moyens de préchauffage du fil d'apport, ce qui facilite la fonte du fil.

Pour des raisons de sécurité et de bon fonctionnement, les moyens constitutifs de l'invention seront de préférence réalisés autant que faire se peut, en des matières isolantes électriquement, des plastiques, du caoutchouc ou analogues.

Par ailleurs, le dispositif selon l'invention pourra comprendre des moyens pour enregistrer les paramètres de la cinématique et la valeur de la quantité d'énergie qui doit être délivrée pour faire fondre le fil d'apport. Ces paramètres sont la vitesse d'avancée continue du fil d'apport, la fréquence du mouvement de va et vient, la puissance électrique délivrée au niveau de la torche, la nature du métal etc. Ces informations pourront êtres stockées par exemple dans une puce intégrée au dispositif ou tout autre support de stockage de données.

De manière avantageuse, ce support de données pourra être inséré dans la console de commande. Dans le dispositif, on pourra naturellement conserver un mode de fonctionnement totalement manuel. Dans ce mode de fonctionnement, le réglage des paramètres de la cinématique sera fixé manuellement au moyen d'un abaque.

Dans un mode de réalisation plus perfectionné du dispositif de soudure selon l'invention, le réglage de la cinématique et le niveau d'énergie délivrée pour faire fondre le fil pourra être calculé automatiquement en fonction de l'entrée de valeurs caractéristiques du fil d'apport et des pièces à souder. Ces valeurs caractéristiques son par exemple le diamètre du fil, la nature du métal qui le constitue, l'épaisseur et la nature des pièces à souder etc.

De manière très avantageuse, le dispositif de soudure permet de manière inattendue d'obtenir d'aussi bon résultats qu'avec les dispositifs connus de l'art antérieur et ceci en s'affranchissant d'une possibilité de réglage.

On comprend ainsi mieux à la lumière de la description qui précède de quelle manière les objectifs de l'invention sont réalisés.

La simplicité du dispositif en utilisation et au montage ainsi que son coût de fabrication réduit lui confère un attrait supplémentaire.

## Revendications

1. Dispositif de soudure électrique sous atmosphère gazeuse comprenant une enveloppe (3), un poste de distribution d'énergie (4), un chariot de distribution continue de fil (2) d'apport présenté en bobine (11), comprenant une combinaison de moyens (1, 5, 18, 21, 24, 31) englobés à l'intérieur de l'enveloppe et/connectés entre eux par un couplage qui est de préférence mécanique, **caractérisé en ce que** lesdits moyens (1, 5, 18, 21, 24, 31) étant tributaires d'une seule commande pour obtenir les caractéristiques cinématiques souhaitées du mouvement du fil (2), et étant actionnés par un moteur unique (15), commandé par un moyen de réglage unique (8) au niveau d'une console de commande (10) ; ledit moteur (15) entraînant simultanément un moyen (18) couplé à une bielle (5), ledit moyen (18) communiquant un mouvement de va-et-vient à un support (1) et simultanément un mouvement de rotation à un moyen (24) d'entraînement des poulies (21) et des galets (31).

2. Dispositif de soudure électrique sous atmosphère gazeuse selon la revendication 1, **caractérisé en ce que** le moyen de communication du mouvement de va-et-vient (18) au support (1) supporte au moins une bielle (5) fixée librement en rotation sur ledit moyen (18), la ou lesdites bielles (5) étant simultanément reliées librement en rotation au support (1).

3. Dispositif de soudure électrique sous atmosphère gazeuse selon la revendication 2, **caractérisé en ce que** la, ou lesdites bielles (5) peuvent en outre être fixées dans une direction radiale par rapport au centre de rotation (17) du moyen (18) au niveau d'une fente adaptée (16) présente sur le moyen (18).

4. Dispositif de soudure électrique sous atmosphère gazeuse selon la revendication 1, **caractérisé en ce que** le moyen de communication de mouvement (18) au support (1) peut être une came de type à au moins deux points d'appuis ou un plateau support de la ou desdites bielles (5).

5. Dispositif de soudure électrique sous atmosphère gazeuse selon la revendication 1, **caractérisé en ce que** le moyen d'entraînement (24) des moyens (31) est au moins une courroie, au moins une chaîne ou une cascade d'engrenage, de préférence une courroie.

6. Dispositif de soudure électrique sous atmosphère gazeuse selon la revendication 5, **caractérisé en ce que** au moins une courroie (24) peut être munie de moyens de coopération qui peuvent être des dents ou un revêtement adapté pour favoriser la prise avec les moyens de transmission du type poulies (21) et avec les galets d'entraînement (31).

7. Dispositif de soudure électrique sous atmosphère gazeuse selon la revendication 1, **caractérisé en ce que** le fil d'apport (2) est entraîné par au moins un galet et un contre galet (31).

8. Dispositif de soudure électrique sous atmosphère gazeuse selon la revendication 1, **caractérisé en ce que** les galets (31) sont fixés de manière libre en rotation sur le support (1).

9. Dispositif de soudure électrique sous atmosphère gazeuse selon la revendication 1, **caractérisé en ce que** le support (1) en fonctionnement décrive un mouvement de va-et-vient dans une direction sensiblement identique à celle du fil d'apport.

10. Dispositif de soudure électrique sous atmosphère gazeuse selon la revendication 9, **caractérisé en ce que** le support (1) est guidé par des moyens de guidage (33) pour un mouvement sensiblement parallèle à la direction du fil d'apport (2).

11. Dispositif de soudure électrique sous atmosphère gazeuse selon la revendication 10, **caractérisé en ce que** les moyens de guidage (33) sont au moins une glissière de préférence deux glissières ou au moins une fente de guidage (34) et au moins un plot de guidage (34').

12. Dispositif de soudure électrique sous atmosphère gazeuse selon la revendication 1, **caractérisé en ce qu'**il comprend une buse de sortie (28) du fil d'apport (2) à l'extrémité d'une torche (27) de sortie du fil d'apport à l'extérieur du dispositif de soudure ladite torche étant munie d'un bouton de mise en marche (29).

13. Dispositif de soudure électrique sous atmosphère gazeuse selon la revendication 1, **caractérisé en ce qu'**il peut comprendre des moyens de préchauffage du fil d'apport.

14. Dispositif de soudure électrique sous atmosphère gazeuse selon l'une quelconque des revendications précédentes, **caractérisé en ce que** les moyens constitutifs de l'invention sont en des matières adaptées pour la réalisation de l'invention et qui sont de préférence isolantes électriquement.

15. Dispositif de soudure électrique sous atmosphère gazeuse selon la revendication 1, **caractérisé en ce que** les paramètres de la cinématique et la quantité d'énergie qui est délivrée pour faire fondre le fil d'apport sont enregistrés dans une puce située par exemple dans la console de commande ou **en ce que** le réglage des paramètres de la cinématique est réalisé manuellement au moyen d'un abaque.

16. Dispositif de soudure électrique sous atmosphère gazeuse selon la revendication 15, **caractérisé en ce que** le réglage de la cinématique et le niveau d'énergie délivrée pour faire fondre le fil est calculé automatiquement en fonction de l'entrée de valeurs caractéristiques du fil d'apport et des pièces à souder, telles que diamètre du fil, la nature du métal qui constitue le fil, l'épaisseur et la nature des pièces à souder.

## Claims

1. Device for electric welding under gaseous atmosphere, comprising a casing (3), a power supply distribution station (4), a carriage continuously feeding filler wire (2) from a reel (11), comprising a combination of means (1,5,18,21,24,31) included inside the casing and linked to each other by a connection which is preferably mechanical, **characterised in that** said means (1,5,18,21,24,31) are dependent on a single control in order to obtain the kinematic characteristics desired for the motion of the filler wire (2), and are operated by a single motor (15), controlled by a single adjusting member (8) on a control panel (10); said motor (15) simultaneously drives a means (18) connected to a pushrod (5), said means (18) transmitting a back-and-forth motion to a support (1) and simultaneously a rotational movement to a means (24) of driving pulleys (21) and rollers (31).

2. Device for electric welding under gaseous atmosphere according to claim 1, **characterised in that** the means of transmitting the back-and-forth motion (18) to the support (1) bears at least one pushrod (5) fixed so that is can rotate freely on said means (18), where said pushrods (5) are simultaneously connected so that they can freely rotate on the support (1).

3. Device for electric welding under gaseous atmosphere according to claim 2, **characterised in that** said pushrod(s) (5) can furthermore be fixed in a radial direction with regard to the centre of rotation (17) of the means (18) at the level of a suitable slot (16) which is found on the means (18).

4. Device for electric welding under gaseous atmosphere according to claim 1, **characterised in that** the means of transmitting the motion (18) to the support (1) can be a cam with at least two control points or a plate supporting said pushrod(s) (5).

5. Device for electric welding under gaseous atmosphere according to claim 1, **characterised in that** the means of driving (24) the means (31) is at least one belt, at least one chain or multistage gear, preferably a belt.

6. Device for electric welding under gaseous atmosphere according to claim 5, **characterised in that** at least one belt (24) can be supplied with means of engagement, which can be teeth or a suitable coating, in order to allow the pulley means of transmission (21) to grip the driving rollers (31).

7. Device for electric welding under gaseous atmosphere according to claim 1, **characterised in that** the filler wire (2) is driven by at least one roller and one counter roller (31).

8. Device for electric welding under gaseous atmosphere according to claim 1, **characterised in that** the rollers (31) are fitted so that they can rotate freely on the support (1).

9. Device for electric welding under gaseous atmosphere according to claim 1, **characterised in that** the support (1) when operated follows a back-and-forth motion in approximately the same direction as the filler wire.

10. Device for electric welding under gaseous atmosphere according to claim 9, **characterised in that** the support (1) is guided by the guiding means (33) in a motion approximately parallel to the direction of the filler wire (2).

11. Device for electric welding under gaseous atmosphere according to claim 10, **characterised in that** the guiding means (33) are at least one sliding rail, preferably two sliding rails, or at least one guiding slot (34) and at least one guiding stud (34').

12. Device for electric welding under gaseous atmosphere according to claim 1, **characterised in that** it comprises an exit nozzle (28) for the filler wire (2) at the end of an exit torch (27) for the filler wire on the exterior of the welding device, said torch being provided with an activation button (29).

13. Device for electric welding under gaseous atmosphere according to claim 1, **characterised in that** it can comprise means for pre-heating the filler wire.

14. Device for electric welding under gaseous atmosphere according to any of the previous claims, **characterised in that** the constitutive means of the invention are made of materials adapted to the production of the invention and are preferably electrical insulators.

15. Device for electric welding under gaseous atmosphere according to claim 1, **characterised in that** the parameters of the motion and the amount of power supplied in order to melt the filler wire are recorded on a microchip located for example in the control panel, or **in that** the parameters of motion are adjusted manually by means of a nomogram.

16. Device for electric welding under gaseous atmosphere according to claim 15, **characterised in that** adjustments to the motion and the level of power supplied in order to melt the wire are calculated automatically in accordance with entered values characteristic of the filler wire and the pieces to be welded, such as the diameter of the wire, the nature of the metal making up the wire, the thickness and nature of the pieces to be welded.

## Patentansprüche

1. Vorrichtung zum Elektroschweißen unter Schutzgas, die eine Hülle (3), eine Energieverteilungsstation (4), einen Wagen zur kontinuierlichen Ausgabe eines auf einer Spule (11) vorliegenden Schweißdrahts (2) aufweist, mit einer Kombination von Einrichtungen (1, 5, 18, 21, 24, 31), die im Inneren der Hülle enthalten und miteinander durch eine Kopplung verbunden sind, die vorzugsweise mechanisch ist, **dadurch gekennzeichnet, dass** die Einrichtungen (1, 5, 18, 21, 24, 31) von einer einzigen Steuerung abhängen, um die gewünschten kinematischen Eigenschaften der Bewegung des Drahts (2) zu erhalten, und von einem einzigen Motor (15) betätigt werden, der von einer einzigen Regeleinrichtung (8) in Höhe eines Schaltpults (10) gesteuert wird; wobei der Motor (15) gleichzeitig eine mit einer Schubstange (5) gekoppelte Einrichtung (18) antreibt, wobei die Einrichtung (18) einem Träger (1) eine Hin- und Herbewegung und gleichzeitig einer Einrichtung (24) für den Antrieb der Riemenscheiben (21) und der Rollen (31) eine Drehbewegung verleiht.

2. Vorrichtung zum Elektroschweißen unter Schutzgas nach Anspruch 1, **dadurch gekennzeichnet, dass** die Einrichtung (18), um dem Träger (1) die Hin- und Herbewegung zu verleihen, mindestens eine Schubstange (5) trägt, die drehfrei an der Einrichtung (18) befestigt ist, wobei die Schubstange(n) (5) gleichzeitig drehfrei mit dem Träger (1) verbunden ist (sind).

3. Vorrichtung zum Elektroschweißen unter Schutzgas nach Anspruch 2, **dadurch gekennzeichnet, dass** die Schubstange(n) (5) außerdem in einer radialen Richtung bezüglich des Drehpunkts (17) der Einrichtung (18) in Höhe eines geeigneten Schlitzes (16) befestigt sein kann (können), der auf der Einrichtung (18) vorhanden ist.

4. Vorrichtung zum Elektroschweißen unter Schutzgas nach Anspruch 1, **dadurch gekennzeichnet, dass** die Einrichtung (18), um dem Träger (1) eine Bewegung zu verleihen, eine Nocke des Typs mit mindestens zwei Auflagepunkten oder eine Tragplatte der Schubstange(n) (5) sein kann.

5. Vorrichtung zum Elektroschweißen unter Schutzgas nach Anspruch 1, **dadurch gekennzeichnet, dass** die Antriebseinrichtung (24) der Einrichtungen (31) mindestens ein Riemen, mindestens eine Kette oder mindestens eine Zahnradkaskade, vorzugsweise ein Riemen ist.

6. Vorrichtung zum Elektroschweißen unter Schutzgas nach Anspruch 5, **dadurch gekennzeichnet, dass** mindestens ein Riemen (24) mit Einrichtungen zur Zusammenwirkung versehen sein kann, die Zähne oder ein geeigneter Belag sein können, um den Eingriff mit den Übertragungseinrichtungen vom Typ Riemenscheiben (21) und mit den Antriebsrollen (31) zu begünstigen.

7. Vorrichtung zum Elektroschweißen unter Schutzgas nach Anspruch 1, **dadurch gekennzeichnet, dass** der Schweißdraht (2) von mindestens einer Rolle und einer Gegenrolle (31) angetrieben wird.

8. Vorrichtung zum Elektroschweißen unter Schutzgas nach Anspruch 1, **dadurch gekennzeichnet, dass** die Rollen (31) drehfrei auf dem Träger (1) befestigt sind.

9. Vorrichtung zum Elektroschweißen unter Schutzgas nach Anspruch 1, **dadurch gekennzeichnet, dass** der Träger (1) im Betrieb eine Hin- und Herbewegung in einer Richtung im Wesentlichen gleich derjenigen des Schweißdrahts durchführt.

10. Vorrichtung zum Elektroschweißen unter Schutzgas nach Anspruch 9, **dadurch gekennzeichnet, dass** der Träger (1) von Führungseinrichtungen (33) für eine Bewegung im Wesentlichen parallel zur Richtung des Schweißdrahts (2) geführt wird.

11. Vorrichtung zum Elektroschweißen unter Schutzgas nach Anspruch 10, **dadurch gekennzeichnet, dass** die Führungseinrichtungen (33) mindestens eine Gleitschiene, vorzugsweise zwei Gleitschienen, oder mindestens ein Führungsschlitz (34) und mindestens ein Führungsklötzchen (34') sind.

12. Vorrichtung zum Elektroschweißen unter Schutzgas nach Anspruch 1, **dadurch gekennzeichnet, dass** sie eine Austrittsdüse (28) des Schweißdrahts (2) am Ende eines Brenners (27) für den Austritt des Schweißdrahts nach außerhalb der Schweißvorrichtung aufweist, wobei der Brenner mit einem Einschaltknopf (29) versehen ist.

13. Vorrichtung zum Elektroschweißen unter Schutzgas nach Anspruch 1, **dadurch gekennzeichnet, dass** sie Vorwärmeinrichtungen für den Schweißdraht aufweisen kann.

14. Vorrichtung zum Elektroschweißen unter Schutzgas nach einem der vorhergehenden Ansprüche, **dadurch gekennzeichnet, dass** die erfindungsgemäßen Einrichtungen aus Stoffen sind, die für die Durchführung der Erfindung geeignet und vorzugsweise elektrisch isolierend sind.

15. Vorrichtung zum Elektroschweißen unter Schutzgas nach Anspruch 1, **dadurch gekennzeichnet, dass** die Parameter der Kinematik und die Energiemenge, die geliefert wird, um den Schweißdraht schmelzen zu lassen, auf einem Chip gespeichert sind, der sich zum Beispiel im Schaltpult befindet, oder dass die Einstellung der Parameter der Kinematik manuell mittels eines Nomogramms durchgeführt wird.

16. Vorrichtung zum Elektroschweißen unter Schutzgas nach Anspruch 15, **dadurch gekennzeichnet, dass** die Einstellung der Kinematik und das Energieniveau, das geliefert wird, um den Schweißdraht schmelzen zu lassen, automatisch in Abhängigkeit von der Eingabe charakteristischer Werte des Schweißdrahts und der zu schweißenden Bauteile berechnet wird, wie der Durchmesser des Drahts, die Beschaffenheit des den Draht bildenden Metalls, die Dicke und die Beschaffenheit der zu schweißenden Bauteile.
